# FASCICULE DE BREVET EUROPEEN

(11) **EP 2 300 271 B1**
(45) Date de publication et mention de la délivrance du brevet: **18.01.2012**
(21) Numéro de dépôt: 09797581.7
(22) Date de dépôt: 10.07.2009
(51) Int. Cl.: B60R 13/08

(54) **CAISSE DE VEHICULE AUTOMOBILE COMPORTANT UN ELEMENT D'INSONORISATION ET VEHICULE AUTOMOBILE COMPRENANT UNE TELLE CAISSE**
MOTORFAHRZEUGKAROSSERIE MIT EINEM LÄRMSCHUTZELEMENT UND MOTORFAHRZEUG MIT EINER SOLCHEN KAROSSERIE
MOTOR VEHICLE BODY COMPRISING A SOUNDPROOFING ELEMENT AND MOTOR VEHICLE COMPRISING SUCH A BODY

(30) Priorité: 15.07.2008 FR 0804019
(43) Date de publication de la demande: 30.03.2011
(73) Titulaire: Renault S.A.S., 92100 Boulogne-Billancourt (FR)
(72) Inventeur: AESCHLIMANN, Jean-Louis, F-28230 Epernon (FR)
(86) Numéro de dépôt international: PCT/FR2009/051386
(87) Numéro de publication internationale: WO 2010/007302

(56) Documents cités:
- EP-A- 0 374 975
- EP-A- 1 386 787
- EP-A- 1 457 387
- WO-A-98/04441
- DE-B3-102006 031 396

## Description

La présente invention se rapporte à une caisse de véhicule automobile et à un véhicule automobile comprenant une telle caisse.

De manière connue, une caisse de véhicule automobile comprend au moins deux parties, à savoir une partie avant, généralement destinée à recevoir un groupe motopropulseur, et une partie centrale, comprenant une partie destinée à former un habitacle, ces deux parties étant séparées par un tablier avant qui s'étend de manière transversale par rapport à l'axe longitudinal du véhicule automobile.

La partie supérieure du tablier comprend une traverse inférieure de baie sur une face de laquelle est destinée à venir s'appuyer la partie inférieure d'un pare-brise. Du côté de l'habitacle, un élément d'insonorisation est prévu pour améliorer l'isolation acoustique entre l'habitacle et la partie avant du véhicule. Cet élément d'insonorisation comprend généralement une couche de masse lourde qui forme une couche d'isolation acoustique et une couche de mousse, par exemple en polyuréthane, qui forme une couche d'absorption acoustique. L'élément d'insonorisation est tout d'abord prépositionné par un opérateur ou par un robot lors du montage du véhicule, un bord supérieur de l'élément d'insonorisation étant alors simplement en appui sur la face supérieure de la traverse inférieure de baie.

Ce mode de montage provisoire n'est pas adapté à certains types de véhicules.

En effet, pour offrir de bonnes performances d'isolation acoustique, il est nécessaire que l'élément d'insonorisation ait une hauteur importante, et par exemple descende jusqu'au plancher de la caisse, ainsi qu'une certaine épaisseur, ce qui induit un poids important. Il y a donc un risque, l'élément d'insonorisation étant prépositionné par rapport au tablier mais pas encore fixé à celui-ci, que l'élément d'insonorisation se déplace par rapport au tablier lors du déplacement de la caisse sur la ligne de montage.

Par ailleurs, pour des raisons esthétiques, il n'est pas rare que le tablier ne soit pas sensiblement vertical mais au contraire qu'il soit incliné ou incurvé, la traverse inférieure de baie étant alors positionnée plus vers l'arrière de la caisse que la partie inférieure du tablier. Cette position en surplomb de la traverse inférieure de baie a pour conséquence de rendre plus délicat et moins fiable le prépositionnement de l'élément d'insonorisation. Ceci constitue un problème car un positionnement imprécis oblige à reconformer l'élément d'insonorisation pour que sa face en regard du tablier ait une forme correspondant à celle du tablier, cette opération de reconformation n'étant pas facile.

La présente invention vise à résoudre ce problème et notamment à faciliter le prépositionnement de l'élément d'insonorisation.

La présente invention atteint son but en proposant une caisse de véhicule automobile présentant une partie avant et une partie centrale, ladite partie centrale étant destinée à former un habitacle, la partie avant et la partie centrale étant séparées par un tablier avant transversal destiné à recevoir un élément d'insonorisation, le tablier comportant en partie supérieure une traverse inférieure de baie, comme divulguée par le document DE-B3-10 2006 031396, qui se caractérise en ce que la traverse inférieure de baie comporte au moins deux éléments d'accrochage destinés à coopérer avec des découpes correspondantes pratiquées dans l'élément d'insonorisation pour positionner l'élément d'insonorisation par rapport au tablier avant.

Selon un mode de réalisation avantageux, les éléments d'accrochage sont disposés symétriquement par rapport à un plan longitudinal X de symétrie de la caisse du véhicule automobile.

De préférence, le nombre d'éléments d'accrochage est égal à deux.

Selon un mode particulier de réalisation, chaque élément d'accrochage est formé d'un élément de plaque venu de matière avec la traverse inférieure de baie et plié.

Selon un autre mode particulier de réalisation, chaque élément d'accrochage est formé d'un indexeur rapporté par soudage.

Selon encore un autre mode particulier de réalisation, dans le cas où la traverse inférieure de baie comporte au moins deux indexeurs de planche de bord, les éléments d'accrochage sont constitués par au moins une partie desdits indexeurs.

L'invention a également pour objet un véhicule automobile comprenant une caisse de véhicule automobile selon l'invention et un élément d'insonorisation comportant des découpes correspondant aux éléments d'accrochage du tablier.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue en perspective d'une partie d'une caisse d'un véhicule ayant une traverse inférieure de baie, selon un premier mode de réalisation de l'invention,
- la figure 2 représente un détail agrandi de la partie de la traverse inférieure de baie de la figure 1 illustrant un élément d'accrochage selon l'invention pour l'élément d'insonorisation,
- la figure 3 est une coupe transversale A-A de la partie supérieure du tablier de la figure 1 et de la figure 2, et
- la figure 4 est une coupe transversale d'une partie d'une caisse d'un véhicule ayant une traverse inférieure de baie, selon un second mode de réalisation de l'invention.

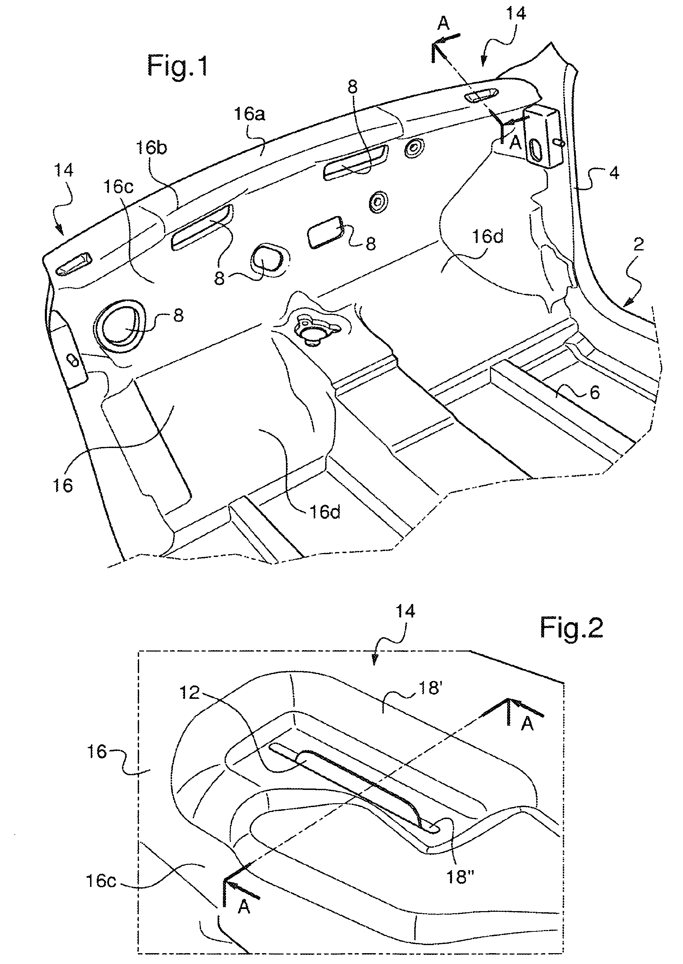

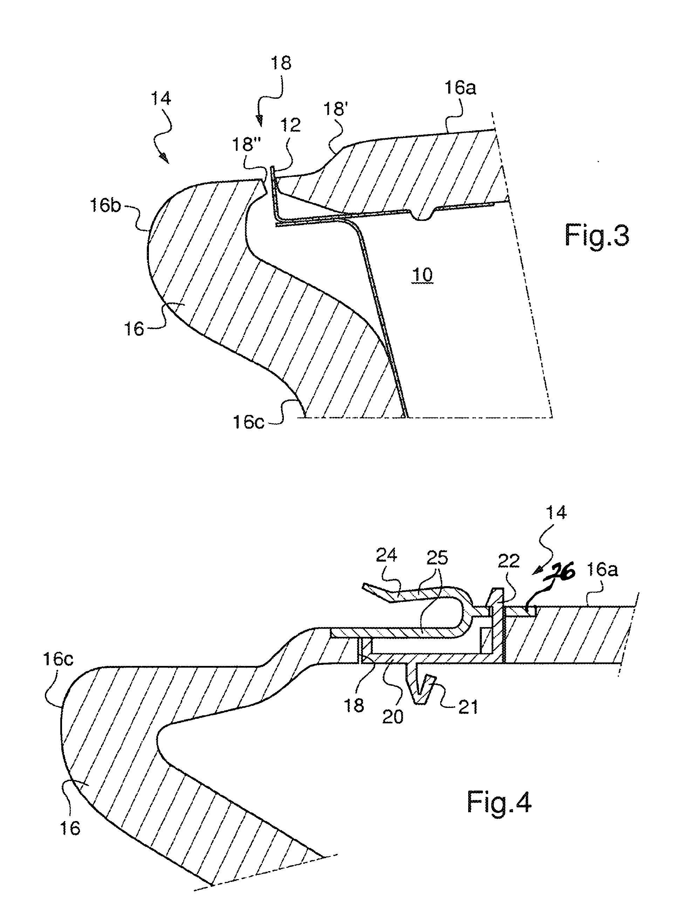

Sur la figure 1, on a représenté une partie de caisse 2 d'un véhicule automobile comprenant essentiellement un plancher 6, un montant latéral 4 (on n'a pas représenté le montant latéral symétrique) et un tablier s'élevant au- devant de l'habitacle et caché sur la figure par le panneau insonorisant 16 qui le recouvre. Le tablier et le panneau 16 comprennent un ensemble d'orifices 8 pour le passage des organes traversant le poste de conduite, tels que les pédaliers, la colonne de direction, les conduits d'aération, etc. Le tablier 4 comporte dans sa partie supérieure une traverse inférieure de baie 10 destinée notamment à recevoir la partie inférieure d'un pare-brise ; cette traverse est également cachée sur la figure 1 par le haut du panneau d'insonorisation qui la recouvre, mais est visible en coupe sur la figure 3. Le panneau d'insonorisation 16 comporte donc, de bas en haut, une partie haute sensiblement horizontale 16a destinée à couvrir la traverse de baie, puis après un arrondi 16b, une partie plus ou moins verticale 16c, suivie d'une partie plus ou moins déclive 16d descendant vers l'habitacle. Les parties basses sont plus lourdes que les parties hautes et quand on positionne le panneau d'insonorisation 16, elles risquent de l'entraîner hors de la position correcte dans laquelle on souhaite le mettre.

Selon l'invention, la traverse inférieure de baie 10 comprend au moins deux éléments d'accrochage 12, dans des zones d'accrochage 14 pour positionner et retenir le panneau d'insonorisation 16. A cette fin, l'élément d'insonorisation 16 comprend des découpes 18 correspondant aux éléments d'accrochage 12. Dans le cas d'un élément d'insonorisation formé d'une masse lourde et d'une couche de mousse, ces découpes comprennent des évidements 18' dans la couche de mousse et des orifices, tels que des fentes 18", ménagés dans la masse lourde.

On comprend, comme on peut le voir sur les figures 2 et 3, que l'élément d'accrochage 12 permet de maintenir en place l'élément d'insonorisation 16, même si la traverse inférieure de baie 10 est en surplomb par rapport au tablier 4. Par ailleurs, en sélectionnant des éléments d'accrochage 12 et des découpes 18 de formes complémentaires, on assure un positionnement relatif précis des orifices 8 du tablier et des découpes correspondantes de l'élément d'insonorisation 16 tant selon l'axe longitudinal du véhicule (axe X) que selon son axe transversal (axe Y). Ce positionnement correct est particulièrement important dans le cas d'un élément d'insonorisation présentant une masse importante, par exemple de plus de 5 kg.

Les éléments d'accrochage 12 peuvent être réalisés de toute manière connue. Un mode de réalisation avantageux, représenté sur les figures 2 et 3, consiste à former des pattes 12 par repliage d'une plaquette de tôle, par exemple de 12 à 15 mm d'épaisseur, après ébauchage de la traverse inférieure de baie 10 par emboutissage. En fonction du poids de l'élément d'insonorisation 16, il peut être utile de prévoir plus de deux pattes 12.

Un autre mode de réalisation des éléments d'accrochage consiste à rapporter sur la traverse inférieure de baie des indexeurs, par exemple par clippage ou soudage. Des indexeurs de forme sensiblement cylindriques et de diamètre d'environ 30 mm conviennent à une large gamme d'éléments d'insonorisation.

La figure 4 représente un autre mode de réalisation dans lequel on utilise des indexeurs d'indexation de la planche de bord pour positionner le panneau d'insonorisation 16. Selon l'invention, l'indexeur comporte une partie 20 qui vient se fixer par un harpon 21 sur la tôlerie non représentée (la traverse de baie). Cette partie comporte une base accolée à la tôle et une patte 22 en saillie destinée à recevoir une partie complémentaire d'indexage. La partie 20 montée sur la traverse de baie sert d'indexage en X et Y du panneau d'insonorisation 16 qui comporte à cet endroit in évidement 18 correspondant. Une fois le panneau 16 indexé sur la ou plutôt les parties 20, celles-ci sont complétées par une partie d'indexage 24 comprenant essentiellement une lyre 25 et une queue 26. La queue 26 comporte un orifice permettant de la clipper sur la patte 22 de la partie de base 20, la queue 26 et une des branches de la lyre 25 venant alors porter sur la mousse du panneau d'insonorisation 16 pour assurer l'étanchéité au bruit. La lyre 25 peut ensuite être utilisée de manière conventionnelle pour recevoir et indexer un élément complémentaire de la planche de bord.

## Revendications

1. Caisse (2) de véhicule automobile présentant une partie avant et une partie centrale, ladite partie centrale étant destinée à former un habitacle, la partie avant et la partie centrale étant séparées par un tablier avant transversal destiné à recevoir un élément d'insonorisation (16), ledit tablier comportant en partie supérieure une traverse inférieure de baie (10), **caractérisée en ce que** ladite traverse inférieur de baie comporte au moins deux éléments d'accrochage (12, 20) destinés à coopérer avec des découpes (18) correspondantes pratiquées dans ledit élément d'insonorisation (16) pour positionner ledit élément d'insonorisation par rapport au tablier avant.

2. Caisse de véhicule automobile selon la revendication 1, **caractérisée en ce que** les éléments d'accrochage (12, 20) sont disposés symétriquement par rapport à un plan longitudinal X de symétrie de la caisse du véhicule automobile.

3. Caisse de véhicule automobile selon l'une des revendications précédentes, **caractérisée en ce que** le nombre d'éléments d'accrochage (12, 20) est égal à deux.

4. Caisse de véhicule automobile selon l'une des revendications 1 à 3, **caractérisée en ce que** chaque élément d'accrochage (12, 20) est formé d'une élément de plaque venu de matière avec la traverse inférieure de baie (10) et plié.

5. Caisse de véhicule automobile selon l'une des revendications 1 à 3, **caractérisée en ce que** chaque élément d'accrochage (12, 20) est formé d'un indexeur rapporté par soudage.

6. Caisse, selon l'une des revendications 1 à 3, de véhicule automobile dans lequel la traverse inférieure de baie comporte au moins deux indexeurs (20, 24) de planche de bord, **caractérisée en ce que** les éléments d'accrochage sont constitués par au moins une partie (20) desdits indexeurs (20, 24).

7. Véhicule automobile comprenant une caisse de véhicule automobile selon l'une des revendications 1 à 6 et un élément d'insonorisation (16)

## Claims

1. Motor vehicle body (2) comprising a front portion and a central portion, said central portion being designed to form a passenger compartment, the front portion and the central portion being separated by a transverse front bulkhead designed to accommodate a soundproofing element (16), said bulkhead comprising in the top portion a structural-opening bottom cross member (10), **characterized in that** said structural-opening bottom cross member comprises at least two coupling elements (12, 20) designed to interact with corresponding cutouts (18) made in said soundproofing element (16) in order to position said soundproofing element relative to the front bulkhead.

2. Motor vehicle body according to Claim 1, **characterized in that** the coupling elements (12, 20) are placed symmetrically relative to a longitudinal plane X of symmetry of the motor vehicle body.

3. Motor vehicle body according to one of the preceding claims, **characterized in that** the number of coupling elements (12, 20) is equal to two.

4. Motor vehicle body according to one of Claims 1 to 3, **characterized in that** each coupling element (12, 20) is formed of a plate element made of the same material and in one piece with the structural-opening bottom cross member (10) and folded.

5. Motor vehicle body according to one of Claims 1 to 3, **characterized in that** each coupling element (12, 20) is formed of an indexer fitted by welding.

6. Body, according to one of Claims 1 to 3, of a motor vehicle in which the structural-opening bottom cross member comprises at least two instrument-panel indexers (20, 24), **characterized in that** the coupling elements consist of at least one portion (20) of said indexers (20, 24).

7. Motor vehicle comprising a motor vehicle body according to one of Claims 1 to 6 and a soundproofing element (16) comprising cutouts (18) corresponding to the coupling elements (12, 20) of said bulkhead.

## Patentansprüche

1. Kraftfahrzeugkarosserie (2), die einen vorderen Bereich und einen mittleren Bereich aufweist, wobei der mittlere Bereich dazu bestimmt ist, einen Fahrgastraum zu formen, wobei der vordere Bereich und der mittlere Bereich durch eine vordere quer verlaufende Spritzwand getrennt sind, die dazu bestimmt ist, ein Schalldämpfungselement (16) aufzunehmen, wobei die Spritzwand im oberen Bereich einen unteren Rahmenquerträger (10) aufweist, **dadurch gekennzeichnet, dass** der untere Rahmenquerträger mindestens zwei Einhakelemente (12, 20) aufweist, die dazu bestimmt sind, mit entsprechenden Ausschnitten (18) zusammenzuwirken, die in dem Schalldämpfungselement (16) ausgearbeitet sind, um das Schalldämpfungselement bezüglich der vorderen Spritzwand zu positionieren.

2. Kraftfahrzeugkarosserie nach Anspruch 1, **dadurch gekennzeichnet, dass** die Einhakelemente (12, 20) bezüglich einer Längssymmetrieebene X der Karosserie des Kraftfahrzeugs symmetrisch angeordnet sind.

3. Kraftfahrzeugkarosserie nach einem der vorhergehenden Ansprüche, **dadurch gekennzeichnet, dass** die Anzahl von Einhakelementen (12, 20) zwei ist.

4. Kraftfahrzeugkarosserie nach einem der Ansprüche 1 bis 3, **dadurch gekennzeichnet, dass** jedes Einhakelement (12, 20) von einem Plattenelement geformt wird, das aus einem Stück mit dem unteren Rahmenquerträger (10) besteht und gebogen ist.

5. Kraftfahrzeugkarosserie nach einem der Ansprüche 1 bis 3, **dadurch gekennzeichnet, dass** jedes Einhakelement (12, 20) von einem durch Schweißen angesetzten Positionierer gebildet wird.

6. Karosserie, nach einem der Ansprüche 1 bis 3, eines Kraftfahrzeugs, bei der der untere Rahmenquerträger mindestens zwei Armaturenbrett-Positionierer (20, 24) aufweist, **dadurch gekennzeichnet, dass** die Einhakelemente aus mindestens einem Bereich (20) der Positionierer (20, 24) bestehen.

7. Kraftfahrzeug, das eine Kraftfahrzeugkarosserie nach einem der Ansprüche 1 bis 6 und ein Schalldämpfungselement (16) aufweist, das Ausschnitte (18) entsprechend den Einhakelementen (12, 20) der Spritzwand aufweist.
